# EUROPEAN PATENT APPLICATION

(11) **EP 2 135 763 A1**
(43) Date of publication of application: **23.12.2009**
(21) Application number: 08425407.7
(22) Date of filing: 10.06.2008
(51) Int. Cl.: B60J 7/06

(54) **Tensioning apparatus for a drawing cable**

(71) Applicant: Marcolin S.r.l., 33170 Pordenone (IT)
(72) Inventor: Amato, Davide, 33080 Fiume Veneto, Pordenone (IT)
(74) Representative: Feltrinelli, Secondo Andrea

(57) **Abstract**

A tensioning apparatus is described comprising a plurality of support centerings (13; 57; 157) for a covering tarpaulin adapted to slide on the edge of a top body, a cable (10; 40; 140) mounted on the top body able to draw back and/or forth on the top body at least a centering. The invention proposes that at least two cable ends or extremities (P1, P2) are constrained to a centering so that said ends or extremities are able to draw it back and forth. An easy and cheap system descends for tensioning the cable.

## Description

The invention refers to a tensioning apparatus for a drawing cable used in an actuating system for coverings of open top bodies, preferably for industrial vehicles.

On the open top bodies of vehicles there is commonly mounted a bellow-like foldable covering tarpaulin, distributed on and supported by centerings slidable on the top body's edge.

The centerings are displaced by two cable rings, arranged on the two sides of the top body, which are tensioned between two pulleys, one of which is driven into rotation by a motor. The feet of the head centering are fixed respectively to a segment of cable belonging to each ring; the other centerings just slide on the cables and use them as a guide. When the motor is active it sets in motion the cable rings with equiverse directions and they draw the centerings back and forth, pushed or pulled by the head centering.

A problem of the system is guaranteeing the cable tensioning.

In EP 1 093 949 e.g. it is solved by connecting two cable ends to a known screw-tensioning device for cables, but in this way the device limits the travel of the cable because it does not allow the cable to rotate about a pulley.

More recent solutions leave the cable ring closed and act on it from the outside.

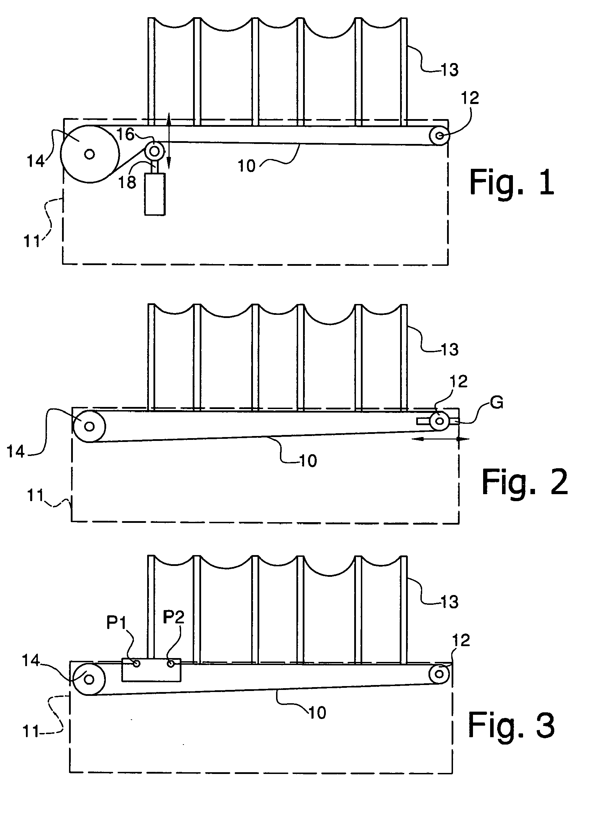

In fig. 1 one can see a cable ring 10 arranged between two pulleys 12, 14 mounted on a top body 11 having centerings 13 for a tarpaulin. On the ring 10 acts orthogonally a third pulley 16 connected to a stem 18 adjustable in length. The greater the length of the stem 18, the greater is the final tension of the ring 10. Mounting the third pulley 16 is expensive, and the effectiveness thereof depends on the characteristics and the bulk of the stem 18: its maximum length determines the maximum displacement of the pulley 16 on the cable 10. In order to obtain a wide bending of the cable, and therefore a wide range of tensioning, the pulley 16 should be mounted very close to the pulley 12 or 14. But there exists a bending limit for the cable beyond which it can break or jam, and this limits the influence of the tensioning device.

In fig. 2 the same basic elements are visible, but this time the tensioning is due to the mobility of the rotation axis (usually through a guide G) of a pulley (in the example the pulley 12, see horizontal double arrow for its displacement). In order to guarantee a wide adjustment range, the lateral travel of the pulley 12 should be considerable, but sometimes it occurs that an end of the top body 11 remains uncovered. And there are cases where the movable pulley 12 holds up the closure of the rear door of the top body 11, above all in those bodies having one or two rear doors opening on the side till they touch the body after 180° of rotation. Thus, as in the preceding case, the structure of the tensioning device guarantees only a limited range of adjustment.

It is the object of the invention to provide a tensioning system very easy to produce, easily adjustable, applicable to top bodies already equipped with a slidable tarpaulin as well, and without adjustment limitations imposed by the characteristics of the top body.

This object is achieved by a tensioning apparatus comprising
- a plurality of support centerings for a covering tarpaulin adapted to slide on the edge of a top body,
- a cable mounted on the top body able to draw back and/or forth on the top body at least a centering,
**characterized in that** at least two cable ends or extremities are constrained to a centering so that said ends or extremities are able to draw it back and forth.

The cable ends may be two ends of a ring, or the ends of cable segments together forming a ring, or further several parallel segments of cable. Note that the apparatus of the invention may be used even though the cable does not form a ring but is constituted by only a cable piece.

Advantageously, fixing means may be provided to fix at two points on a centering at least two cable ends or extremities. The tensioning may occur:
- in unchangeable manner (static), by properly choosing a priori invariable fixing points (in which to force the cable after stretching it),
- stepwise, by providing a discrete series of invariable fixing points on the centering (in which to force the cable after stretching it), or
- adjustably, e.g. through linear adjusting means of the position of one or more fixing points for a cable end and/or through revolving means (the cable is tensioned after it is fixed to the centering).

Vice or jaw means may be used as fixing means as well, wherein a cable end (or generally an extremity) can be blocked in after it has been manually brought to the desired tension.

A further advantage is achieved by arranging two fixing points for the cable ends at different heights. So, when the cable moves the centering, it can impart at the same time to it a torque compensating the resisting torque determined by the skidding and/or the oscillations created by the tension and the abrupt tugs of the tarpaulin.

In fig. 3 it is shown a scheme of the invention. Leaving unaltered a pre-existing equipment of the top body 11 (two pulleys 12, 14 and a cable ring 10), it suffices to fix/constrain two cable ends (in case by cutting the cable) on a centering (e.g. the head centering) or on the skid thereof, see fixing points P1, P2. The points P1, P2 may be - as already said - fixed or position-adjustable, and this may hold for both or just one.

Hence, the invention provides also a simple method to equip a top body, having centerings drawn by a cable ring, with a tensioning system for the same cable, namely it suffices
to obtain two free ends of the cable;
to fix the two ends on a centering at points providing the desired tension.

Advantageously, it is convenient to make adjustable the position on the centering of said points.

The invention and advantages thereof will be clearer from the following description of a preferred embodiment, together with the attached drawings wherein
Figures 1, 2 show schematically known tensioning systems;
Fig. 3 shows schematically the system of the invention;
Fig. 4 shows a three-dimensional view of a preferred embodiment of the system;
Fig. 5 shows a three-dimensional enlarged view of fig. 4;
Fig. 6 shows a three-dimensional view of a component in the system of fig. 4;
Fig. 7 shows a lateral view of the component in fig. 6;
Fig. 8 shows a three-dimensional view of a variant of the invention;
Fig. 9 a three-dimensional view of the variant in fig. 8.

A centering 50 is placed together with others (not shown) on the top edge of a top body 20, on a side of which a cable 40 is taut between two pulleys (not shown) without skimming. One of the two pulleys is connected to a motor. The centering, symmetrical in structure, is composed of two skids 52, each of which supports a support arch 57 for a tarpaulin (not shown). On every skid 52 there is provided a hollow cylindrical connector 54 for the feet of the arches 57. The connectors 54 end and abut with a vertical extremity 55 from the edge of the top body 20, and on this extremity 55 there is fixed (through welding, screws or hooks) a C-plate, denoted by 60. The recessed central part of the plate 60 is arranged between the extremities 55.

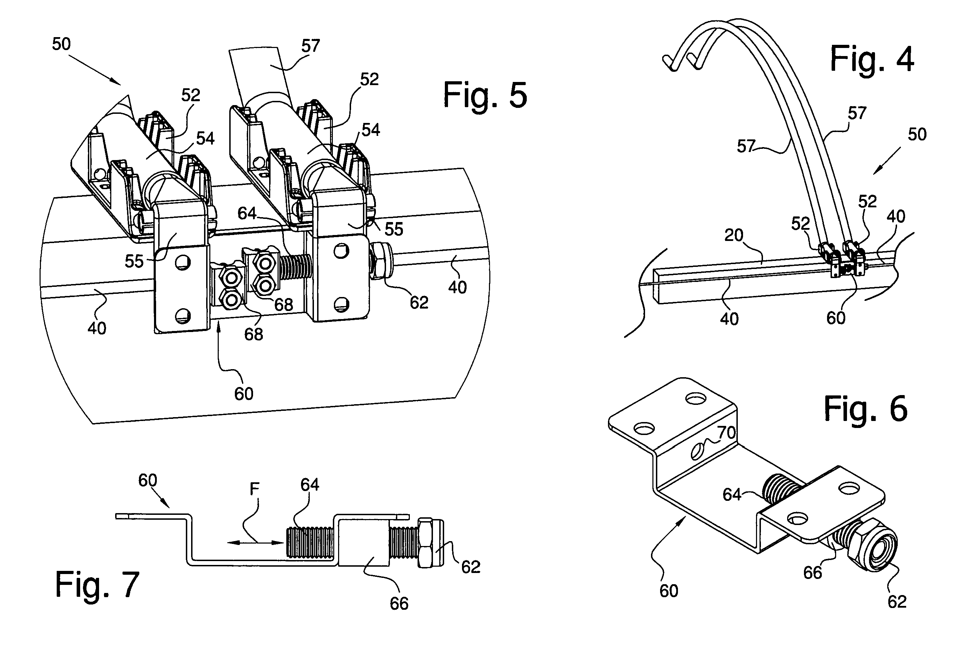

On the outside of the plate 60 is fixed an internally threaded bush 66, in which a counter-threaded hollow cylinder 64 is inserted, able to be screwed therein by means of an hexagonal nut 62. The cylinder 54 can pass through a wall of the plate 60 thanks to a proper hole. Therefore, the cylinder 64 upon rotating may enter more or less into the bush 66, and its free end can adjustably move between the walls of the plate 60 (see double arrow F in fig. 7).

The plate 60 has a hole 70 on the wall facing the cylinder 64. A first end of the cable 40 is made go through the hole 70, behind an extremity 55, and is clasped by a clamp or wire terminal 68. Every blocking means (even a knot) preventing this end of the cable 40 to unthread from the hole 70 may be used.

The other end of the cable 40 is made go through inside the cylinder 64, for it to come out in the interior of the plate 60. The free end of this cable extremity is prevented to escape from the cylinder 64 (e.g. with a knot or a wire terminal or a clamp 68).

In order to increase the tension of the cable 40 it is sufficient to screw the cylinder 64 in the bush 66, so that its body penetrates to a greater extent in the interior of the plate 60 and pushes the cable end resting at its extremity towards the other cable end, which is fixed. The net result is that the two ends of the cable 40 are forced to near each other, and the cable 40 is subject to more tension.

The hole 70 can be offset with respect to the axis of the cylinder 64, in order to achieve the above-illustrated torque compensation effect.

Two cylinders 64 may be mounted on the plate 60, one facing the other and axially offset with respect to each other, in order to double the achievable stroke for the ends of the cable 40 by adjusting independently the position of the two cable ends. Whenever there is an excess of cable or not too much of it is wished to be cut, deviation pulleys or labyrinths may be arranged on the centering in order to lengthen the run of the cable 40.

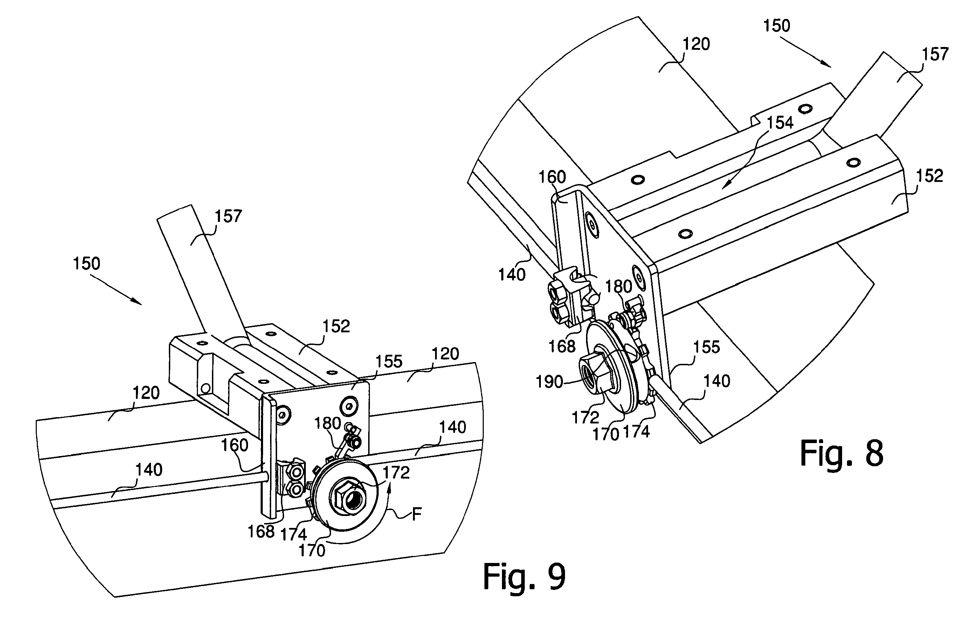

Now see fig. 8 for a variant of the invention. A centering 150 is arranged together with others (not shown) on the top edge of a top body 120, along with pulleys (not shown) and a cable 140 set as before.

The centering 150 is composed of a monolithic skid 152 and a support arch 157 for the tarpaulin (not shown). On the skid 152 there is a receiving parallelepiped open cavity 154 in which the foot of the arch 157 is housed.

At the extremity of the skid 152 a plate 155 is fixed, projecting vertically from the top body and having a lateral extremity 160 bent towards the outside of the top body. As a whole, the plate 155 has L-section.

On the outside of the plate 155 there are rotatably pivoted a pulley 170 and a gear wheel 174, integral with each other and with an almost equal diameter. On the plate 155, above the gear wheel 174, a stop pawl 180 is pivoted and able to oscillate, the point of which can enter or not between the cogs of the gear wheel 174. A fastening, internally threaded hexagonal nut 170 is mounted coaxially to the pulley 170. The pulley 170 is hollow and in its race there is provided a hole 190, wide enough to let an end of the cable 140 to be inserted therein (see fig. 7). In the body of the extremity 160 a pass-through hole 190 is present, by means of which an end of the cable 140 is able to go through it, so as to stay blocked on the other side by a clamp 168 without possibility of coming off. On the opposite side, the other end of the cable is inserted in the hole 190 and then blocked there (e.g. knotted) not to let it out. A part of this end of the cable 140 can be wound in the race of the pulley 170, this being of corresponding dimensions.

To increase the tension of the cable 140 it suffices to rotate counter clockwise (see arrow F in fig. 8) the pulley 170, by means of a wrench engaging the nut 172 or a lever screwed in the threaded hole thereof. The backward travel of the pulley 170 is prevented by the stop pawl 180 sticking on the gear 174. The pawl 180 lifts up instead during the tensioning phase or may be lifted (manually and with an assisted and/or automatic release mechanism) to slack the cable 140.

The advantage of this variant is the wide and greater range in adjusting the tensioning of the cable 140 and the reduced dimensions for the plate 155, since now a cable end is acted upon for traction circularly and not linearly. For wider ranges, the pulley may be replaced by an endless screw, in the thread of which the cable end may be wound.

The hole for the cable 140 in the extremity 160 may be offset in height with respect to the upper horizontal tangent to the pulley 170, in order to obtain the torque compensation effect illustrated above.

The methods described for fixing the cable to the centering may be combined, thereby generating others variants of the invention.

## Claims

1. Tensioning apparatus comprising
- a plurality of support centerings (13; 57; 157) for a covering tarpaulin adapted to slide on the edge of a top body (11; 20; 120),
- a cable (10; 40; 140) mounted on the top body able to draw back and/or forth on the top body at least a centering,
**characterized in that** at least two cable ends or extremities (P1, P2) are constrained to a centering so that said ends or extremities are able to draw it back and forth.

2. Tensioning apparatus according to Claim 1, comprising fixing means (60, 62, 64, 66, 68; 155, 160, 170, 178, 190) for fixing at two points on a centering at least two cable ends or extremities.

3. Tensioning apparatus according to Claim 2, comprising a series of invariable fixing points on the centering.

4. Tensioning apparatus according to Claim 2 or 3, wherein said fixing means comprise vice or jaw means (68; 168) adapted to block a cable end.

5. Tensioning apparatus according to any of the preceding Claims, comprising linear adjusting means (60, 62, 64, 66, 68) of the position of one or more fixing points for a cable end.

6. Tensioning apparatus according to Claim 5, wherein said adjusting means comprise a threaded member (64) screwable in the body of the centering and connected to a cable (40) end, the screwing of the threaded element ensuing in a linear displacement of the cable end.

7. Tensioning apparatus according to Claim 6, comprising a plate (60) fixed to the feet of the centering, the plate having two opposite lateral walls, in one wall being screwable the threaded element (64), in the other wall being arranged a fixing point (68) for the cable.

8. Tensioning apparatus according to Claim 1 or 2, comprising means for adjusting (170) along a curve the position of one or more fixing points for the cable end.

9. Tensioning apparatus according to Claim 8, wherein said means for adjusting comprise a member mounted revolving on the body (155) of the centering and connected to a cable (140) end, so that a rotation of the revolving member results in a displacement of the cable end.

10. Tensioning apparatus according to Claim 9, wherein said revolving member is mounted to wind on itself the cable end.

11. Tensioning apparatus according to Claim 9 or 10, comprising means for blocking (180) in a predetermined position said revolving member, so as to prevent a slacking of the cable.

12. Tensioning apparatus according to Claim 11, wherein said means for blocking comprise a stop pawl (180) engageable in the cogs of a gear wheel (174) integral, or in a single-piece construction, with the revolving member.

13. Tensioning apparatus according to any of the preceding Claims, having two fixing points (P1, P2) for the cable ends arranged at vertically offset heights.

14. Method to equip a top body (11), having centerings (13) drawn by a cable ring (10), with a tensioning system for the same cable, comprising the steps of
obtaining two free ends (P2, P2) of the cable;
fixing the two ends on a centering at points providing the desired tension.

15. Method according to Claim 14, wherein the position on the centering of said points is made adjustable.
